# EUROPEAN PATENT APPLICATION

(11) **EP 1 679 870 A2**
(43) Date of publication of application: **12.07.2006**
(21) Application number: 06006498.7
(22) Date of filing: 24.10.2003
(51) Int. Cl.: H04M 3/54

(54) **Method for forwarding a call to multiple telephone numbers**

(30) Priority: 22.05.2003 US 443390
(62) Divisional of application: 03256747.1
(71) Applicant: Avaya Technology Corp., Basking Ridge, New Jersey 07920-2332 (US)
(72) Inventor: Milton, Stephen M., Freehold New Jersey 07728 (US); Penning, Randall J., Middletown New Jersey 07748 (US)
(74) Representative: McCallum, Graeme David

(57) **Abstract**

A method for handling incoming calls at a private branch exchange is disclosed. A distinction is made between the address space of the Public Switched Telephone Network and the address space of the private branch exchange handling the incoming calls. The method disclosed accounts for one or more conditions present in the associated network and forwards calls to telephone numbers in the different address spaces based on the conditions present.

## Description

The present invention relates to telecommunications in general, and, more particularly, to forwarding telephone calls at a private branch exchange.

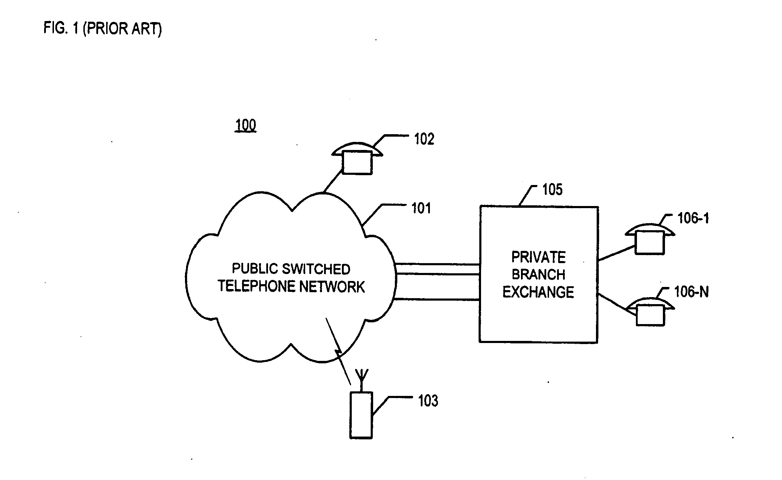

Figure 1 depicts a block diagram of the salient components of telecommunications network 100 in the prior art. Telecommunications network 100 comprises Public Switched Telephone Network 101, wireline terminal 102, wireless terminal 103, private branch exchange 105, and wireline terminals 106-1 through 106-*N*.
Private branch exchange 105 is capable of switching incoming calls from Public Switched Telephone Network 101 via one or more transmission lines to one of wireline terminals 106-1 through 106-*N*. Private branch exchange 105 is also capable of handling outgoing calls from any of wireline terminals 106-1 through 106-*N* to Public Switched Telephone Network 101 via one or more transmission lines that connect private branch exchange 105 to Public Switched Telephone Network 101.

In addition, private branch exchange 105 is capable of also forwarding each incoming call to a telephone number in Public Switched Telephone Network 101. The forwarded-to telephone number in Public Switched Telephone Network 101 can correspond to a terminal such as wireless terminal 103.

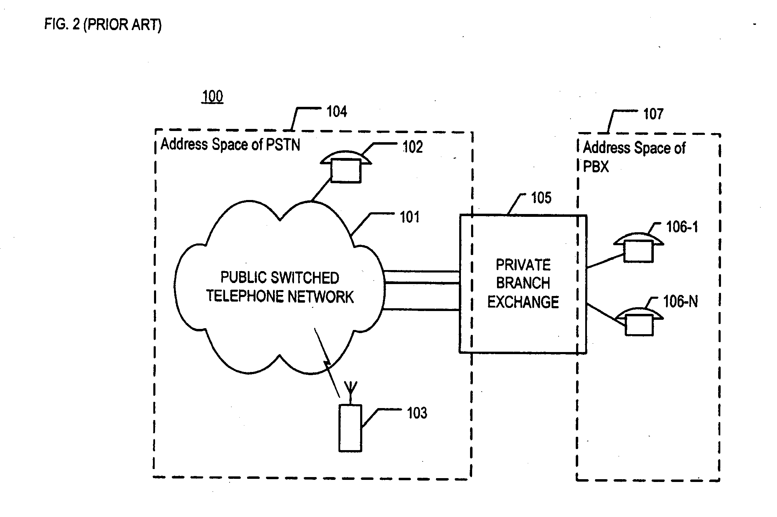

Figure 2 depicts the address spaces that are relevant to telecommunications network 100 in the prior art. The term "address space" refers to an addressable region of telephone service. Address space 104 represents the addressable region served by Public Switched Telephone Network 101. Address space 107 represents the addressable region served by private branch exchange 105. A distinction is made between address space 104 and address space 107 because the same telephone number has two different meanings in each address space.

Private branch exchange 105 exists in both address space 104 and address space 107 and acts as a bridge or gateway between the two address spaces. When a calling party places a call to someone served by private branch exchange 105, the calling party uses a dialing sequence that includes a telephone number belonging to Public Switched Telephone Network 101 and residing in address space 104. As part of the dialing sequence, the calling party also uses an extension number that allows access to one of the terminals residing within address space 107.

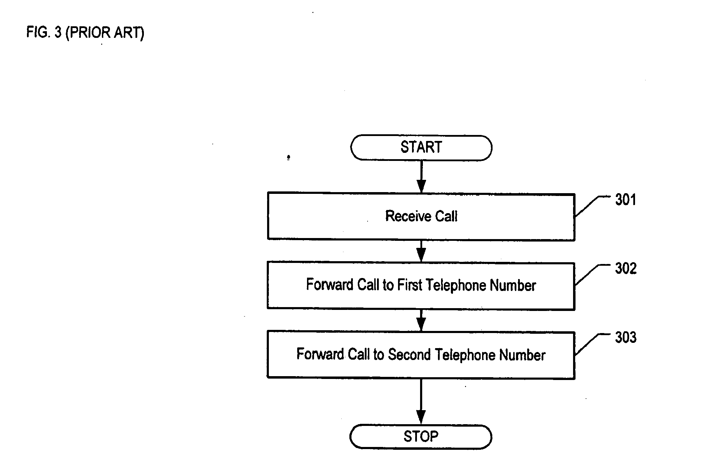

Figure 3 depicts a flowchart of the tasks that are relevant to processing an incoming call in the prior art. To accomplish tasks 301 through 303, private branch exchange 105 maintains a table that correlates Public Switched Telephone Network number to private branch exchange extension. Table 1 depicts an illustrative table that correlates Public Switched Telephone Network number to private branch exchange extension.

**Table 1 - Call Forwarding Database**

| Private Branch Exchange Extension | Public Switched Telephone Network Number |
|---|---|
| 732-555-0102, x11 | 201-555-1236 |
| 732-555-0102, x12 | 908-555-3381 |
| ... | ... |
| 732-555-0102, x99 | 212-555-6784 |

At task 301, private branch exchange 105 receives a call from Public Switched Telephone Network 101, which is originated by wireline terminal 102.

At task 302, private branch exchange 105 forwards the call to a first telephone number. The first telephone number exists in the address space of the private branch exchange, namely address space 107, and can be associated with one of wireline terminals 106-1 through 106-*N*. The first telephone number is represented as the private branch exchange extension in Table 1.

At task 303, private branch exchange 105 also forwards the call to a second telephone number. The second telephone number exists in the address space of Public Switched Telephone Network 101, namely address space 104, and can be associated with a wireless terminal such as wireless terminal 103.

Referring to the example in Table 1, the call, placed to 732-555-0102, extension 11 (*i.e*., shown in the first row), is connected to private branch exchange extension 11 and is also forwarded to Public Switched Telephone Number 201-555-1236.

The present invention enables an incoming call to a private branch exchange to be forwarded to a private branch exchange extension and to a number in the Public Switched Telephone Network that is selected based on one or more criteria. For example, various embodiments of the present invention select the number in the Public Switched Telephone Network based on the calling-party's number, the incoming line to the private branch exchange, the dialed number, the calendrical time, the location of a terminal, and/or environmental factors.

The illustrative embodiment of the present invention comprises: receiving a first call that is associated with a first calling-party telephone number; forwarding the first call to a first telephone number, wherein the first telephone number exists in the address space of a private branch exchange; and forwarding the first call to a second telephone number, wherein the second telephone number exists in the address space of the Public Switched Telephone Network; wherein the first telephone number and the second telephone number are based on the first calling-party telephone number.
Figure 1 depicts a schematic diagram of telecommunications system 100 in the prior art.
Figure 2 depicts a schematic diagram of address space 104 and address space 107 in the prior art.
Figure 3 depicts a flowchart of tasks relevant to processing an incoming call in the prior art.
Figure 4 depicts a schematic diagram of telecommunications system 400, in accordance with the illustrative embodiment of the present invention.
Figure 5 depicts a block diagram of private branch exchange 405, in accordance with the illustrative embodiment of the present invention.
Figure 6 depicts a flowchart of the salient tasks that are relevant to calling-party telephone number, in accordance with the illustrative embodiment of the present invention.
Figure 7 depicts a flowchart of the salient tasks that are relevant to incoming line, in accordance with the illustrative embodiment of the present invention.
Figure 8 depicts a flowchart of the salient tasks that are relevant to dialed number, in accordance with the illustrative embodiment of the present invention.
Figure 9 depicts a flowchart of the salient tasks that are relevant to calendrical time, in accordance with the illustrative embodiment of the present invention.
Figure 10 depicts a flowchart of the salient tasks that are relevant to location of terminal, in accordance with the illustrative embodiment of the present invention.
Figure 11 depicts a flowchart of the salient tasks that are relevant to environmental condition, in accordance with the illustrative embodiment of the present invention.

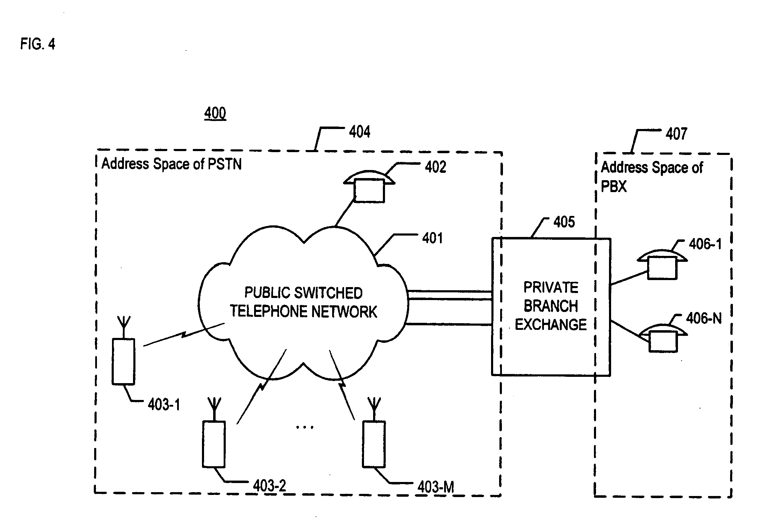

Figure 4 depicts a block diagram of the salient components of telecommunications network 400 in accordance with the illustrative embodiment of the present invention. Telecommunications network 400 comprises Public Switched Telephone Network 401, wireline terminal 402, wireless terminals 403-1 through 403-*M*, wherein M is a positive integer, and the network-facing part of private branch exchange 405, all situated within the address space of the Public Switched Telephone Network, namely address space 404, and interconnected as shown. Telecommunications network 400 also comprises the extension-facing part of private branch exchange 405 and wireline terminals 406-1 through 406-*N*, wherein N is a positive integer, all situated within the address space of the private branch exchange, namely address space 405, and interconnected as shown. It will be clear to those skilled in the art how to make and use Public Switched Telephone Network 401, wireline terminal 402, wireless terminals 403-1 through 403-*M*, and wireline terminals 406-1 through 406-*N*. It will be clear to those skilled in the art, after reading this specification, how to make and use private branch exchange 405.

Private branch exchange 405 is capable of handling incoming calls from Public Switched Telephone Network 401 via one or more transmission lines for the purpose of forwarding each call to a telephone number corresponding to one of wireline terminals 406-1 through 406-*N* (*i.e.*, in address space 407). In addition, private branch exchange 405 is capable of forwarding each incoming call to a telephone number in address space 404. The telephone number in address space 404 can correspond to one of wireless terminals 403-1 through 403-*M*. Private branch exchange 405 is also capable of handling outgoing calls from any of wireline terminals 406-1 through 406-*N* to Public Switched Telephone Network 401 via one or more transmission lines.

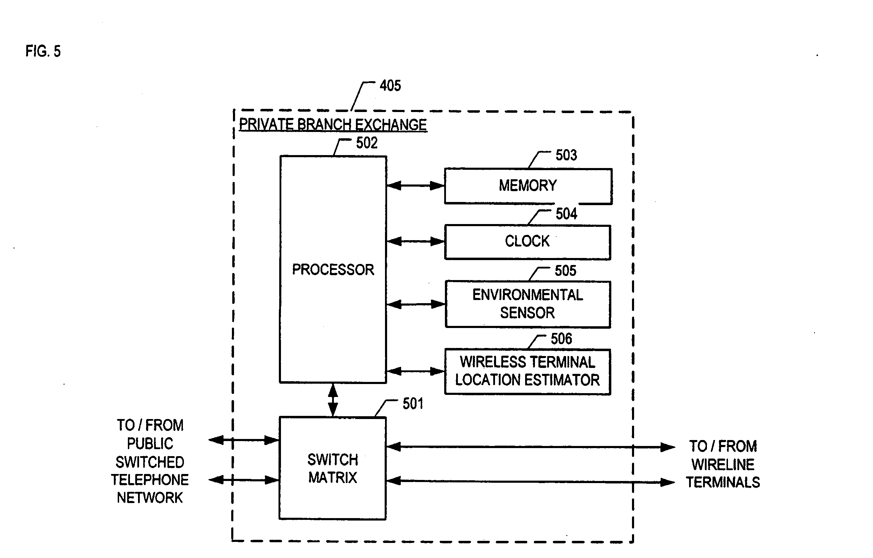

Figure 5 depicts a block diagram of the salient components of private branch exchange 405 in accordance with the illustrative embodiment of the present invention. Private branch exchange 405 comprises: switch matrix 501, processor 502, memory 503, clock 504, environmental sensor 505, and wireless terminal location estimator 506, interconnected as shown.

Switch matrix 501 is a circuit that is capable of receiving call-related data and traffic from Public Switched Telephone Network 401, forwarding call-related data to processor 502, and accepting commands from processor 502. In addition, switch matrix 501 is capable of handling outgoing calls from wireline terminals 406-1 through 406-*N*. Switch matrix 501 also is capable of forwarding call traffic to wireline terminals 406-1 through 406-*N* and also to wireless terminals 403-1 through 403-*M* in Public Switched Telephone Network 401. It will be clear to those skilled in the art how to make and use switch matrix 501.

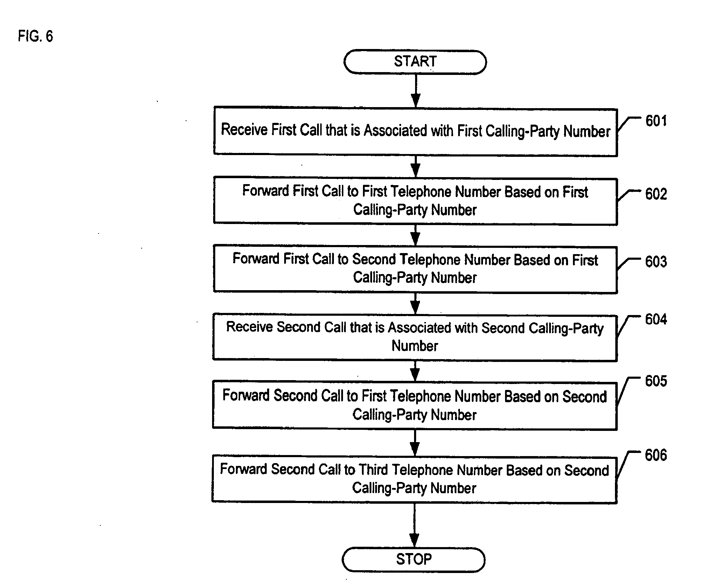

Processor 502 is a general-purpose processor that is capable of performing the tasks described below and with respect to Figures 6 through 11. It will be clear to those skilled in the art, after reading this specification, how to make and use processor 502.

Memory 503 is capable of storing programs and data used by processor 502. It will be clear to those skilled in the art how to make and use memory 503.

Clock 504 is capable of tracking calendrical time at one or more levels of granularity, such as months, days of the week, days of the month, time of day, *etc*. Clock 504 can generate the time internally or it can obtain the time from another source or both. Processor 502 uses the calendrical time tracked by clock 504. It will be clear to those skilled in the art how to make and use clock 504.

Environmental sensor 505 is capable of tracking one or more environmental conditions. Environmental conditions can include rain, wind, sunshine, air quality, presence of seismic activity, *etc*. Environmental sensor 505 can directly sense the environment or it can store environmental data obtained from another source or both. It will be clear to those skilled in the art how to make and use environmental sensor 505.

Wireless terminal location estimator 506 is capable of tracking the location of one or more of wireless terminals 403-1 through 403-*M*. Wireless terminal location estimator 506 can directly determine the location of the wireless terminal or it can store location data obtained from another source or both. It will be clear to those skilled in the art how to make and use wireless terminal location estimator 506.

Figure 6 depicts a flowchart of the salient tasks that are relevant to calling-party number and are performed by the illustrative embodiment of the present invention. It will be clear to those skilled in the art which tasks depicted in Figure 6 can be performed simultaneously or in a different order than that depicted.

To accomplish tasks 601 through 606, private branch exchange 405 maintains a table that correlates physical private branch exchange extension, alert pattern, and Public Switched Telephone Network number to calling-party telephone number. Each unique combination of calling-party telephone number, physical private branch extension, and alert pattern characterize a specific called entity, referred to as a "virtual station." Table 2 depicts an illustrative version of this table.

**Table 2 - Call Forwarding Database Based on Calling-Party Telephone Number**

| Virtual Station | | | |
|---|---|---|---|
| Calling-Party Telephone Number | Physical Private Branch Exchange Extension | Alert Pattern | Public Switched Telephone Network Number |
| 609-555-0102 | 1 | 1 | 201-555-1236 |
| 516-555-9981 | 1 | 2 | 908-555-3381 |
| ... | ... | ... | ... |
| 732-555-3456 | *N* | 1 | 212-555-6784 |

The calling-party telephone number identifies the person (or terminal) originating a telephone call. It will be clear to those skilled in the art how to use calling-party telephone number.

At task 601, private branch exchange 405 receives from Public Switched Telephone Network 401, in well-known fashion, a first call that is associated with a first calling-party telephone number. For example, wireline terminal 402 can originate the call as the first calling party.

At task 602, private branch exchange 405 forwards the first call to a first telephone number, wherein private branch exchange 405 selects the first telephone number based on the first calling-party telephone number. The first telephone number exists in the address space of the private branch exchange, namely address space 407, and can be associated with one of wireline terminals 406-1 through 406-*N*. The first telephone number is represented as physical private branch exchange extension in Table 2.

Private branch exchange 405 can also forward to the first telephone number alerting information that is also based on the first calling-party telephone number. The particular alert pattern that is forwarded can be used to provide distinctive ringing. The distinctive ringing can be used, for example, by multiple users of a single wireline terminal (*e.g.*, wireline terminal 406-1, *etc*.) to help determine the recipient of the call prior to answering. It will be clear to those skilled in the art how to forward alert information.

At task 603, private branch exchange 405 also forwards the first call to a second telephone number, wherein private branch exchange 405 selects the second telephone number based on the first calling-party telephone number. The second telephone number exists in the address space of Public Switched Telephone Network 401, namely address space 404, and can be associated with one of wireless terminals 403-1 through 403-*M*.

Referring to the example in Table 2, the first call, received from calling-party telephone number 609-555-0102, is forwarded to physical private branch exchange extension 1 with alert pattern 1 applied and is also forwarded to Public Switched Telephone Number 201-555-1236.

At task 604, some time later, private branch exchange 405 receives from Public Switched Telephone Network 401, in well-known fashion, a second call that is associated with a second calling-party telephone number. For example, wireless terminal 403-1 can originate the call as the second calling party.

At task 605, private branch exchange 405 forwards the second call to the first telephone number, wherein private branch exchange 405 selects the first telephone number based on the second calling-party telephone number.

Private branch exchange 405 can also forward to the first telephone number alerting information that is also based on the second calling-party telephone number. The particular alert pattern that is forwarded can be used to provide a distinctive ring. As depicted in Table 2, the alert pattern associated with the second calling-party telephone number *(i.e.,* alert pattern "2") can be different that associated with the first calling-party telephone number (*i.e.*, alert pattern "1").

At task 606, private branch exchange 405 also forwards the second call to a third telephone number, wherein private branch exchange 405 selects the third telephone number based on the second calling-party telephone number. The third telephone number exists in the address space of Public Switched Telephone Network 401 and can, for example, be associated with one of wireless terminals 403-1 through 403-*M*.

Referring to the example in Table 2, the second call, received from calling-party telephone number 516-555-9981, is forwarded to physical private branch exchange extension 1 with alert pattern 2 applied and is also forwarded to Public Switched Telephone Number 908-555-3381.

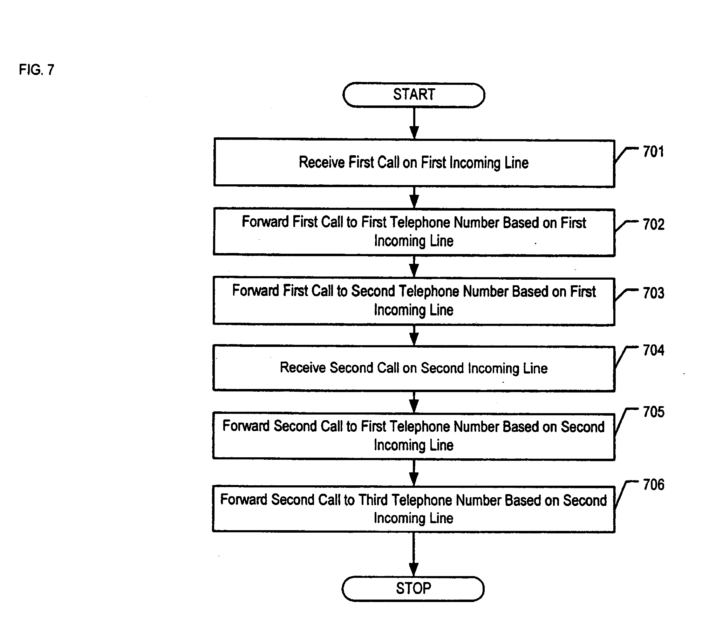

Figure 7 depicts a flowchart of the salient tasks that are relevant to incoming line and are performed by the illustrative embodiment of the present invention. It will be clear to those skilled in the art which tasks depicted in Figure 7 can be performed simultaneously or in a different order than that depicted.

To accomplish tasks 701 through 706, private branch exchange 405 maintains a table that correlates physical private branch exchange extension, alert pattern, and Public Switched Telephone Network number to incoming line. Each unique combination of incoming line, physical private branch extension, and alert pattern characterize a specific called entity, referred to as a "virtual station." Table 3 depicts an illustrative version of this table.

**Table 3 - Call Forwarding Database Based on Incoming Line**

| Virtual Station | | | |
|---|---|---|---|
| Incoming Line | Physical Private Branch Exchange Extension | Alert Pattern | Public Switched Telephone Network Number |
| 732-555-0001 | 1 | 1 | 201-555-1236 |
| 732-555-0002 | 1 | 2 | 908-555-3381 |
| ... | ... | ... | ... |
| 732-555-9999 | *N* | 1 | 212-555-6784 |

The incoming line is a transmission path terminated at private branch exchange 405 that is capable of carrying a call from Public Switched Telephone Network 401. There are multiple ways to designate an incoming line; in the illustrative embodiment, incoming line is designated using telephone number. It will be clear to those skilled in the art how to use incoming line.

At task 701, private branch exchange 405 receives from Public Switched Telephone Network 401, in well-known fashion, a first call that is associated with a first incoming line.

At task 702, private branch exchange 405 forwards the first call to a first telephone number, wherein private branch exchange 405 selects the first telephone number based on the first incoming line. The first telephone number exists in the address space of the private branch exchange, namely address space 407, and can be associated with one of wireline terminals 406-1 through 406-*N*. The first telephone number is represented as physical private branch exchange extension in Table 3.

Private branch exchange 405 can also forward to the first telephone number alerting information, described earlier, that is also based on the first incoming line.

At task 703, private branch exchange 405 also forwards the first call to a second telephone number, wherein private branch exchange 405 selects the second telephone number based on the first incoming line. The second telephone number exists in the address space of Public Switched Telephone Network 401, namely address space 404, and can be associated with one of wireless terminals 403-1 through 403-*M*.

Referring to the example in Table 3, the first call, received on incoming line 732-555-0001, is forwarded to physical private branch exchange extension 1 with alert pattern 1 applied and is also forwarded to Public Switched Telephone Number 201-555-1236.

At task 704, some time later, private branch exchange 405 receives from Public Switched Telephone Network 401, in well-known fashion, a second call that is associated with a second incoming line.

At task 705, private branch exchange 405 forwards the second call to the first telephone number, wherein private branch exchange 405 selects the first telephone number based on the second incoming line.

Private branch exchange 405 can also forward to the first telephone number alerting information, described earlier, that is also based on the second incoming line.

At task 706, private branch exchange 405 also forwards the second call to a third telephone number, wherein private branch exchange 405 selects the third telephone number based on the second incoming line. The third telephone number exists in the address space of Public Switched Telephone Network 401 and can, for example, be associated with one of wireless terminals 403-1 through 403-*M*.

Referring to the example in Table 3, the second call, received on incoming line 732-555-0002, is forwarded to physical private branch exchange extension 1 with alert pattern 2 applied and is also forwarded to Public Switched Telephone Number 908-555-3381.

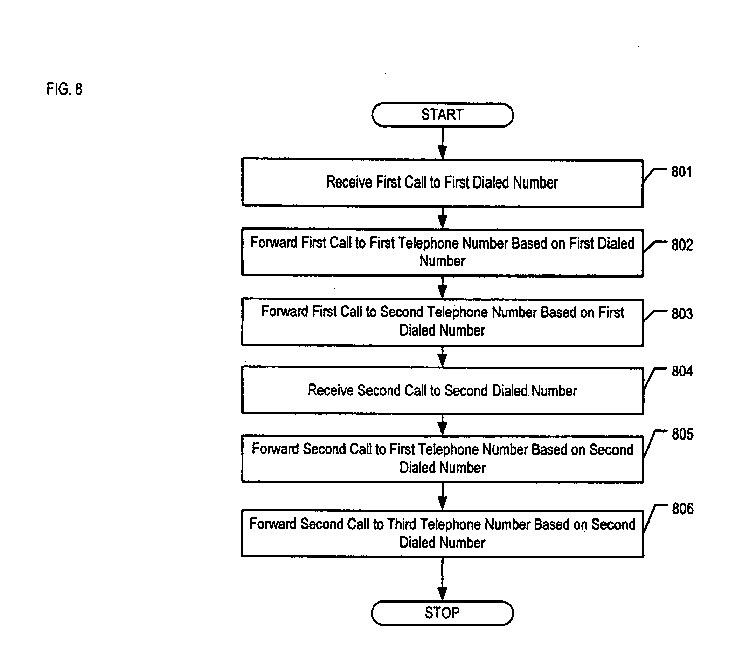

Figure 8 depicts a flowchart of the salient tasks that are relevant to dialed number and are performed by the illustrative embodiment of the present invention. It will be clear to those skilled in the art which tasks depicted in Figure 8 can be performed simultaneously or in a different order than that depicted.

To accomplish tasks 801 through 806, private branch exchange 405 maintains a table that correlates physical private branch exchange extension, alert pattern, and Public Switched Telephone Network number to dialed number. Each unique combination of dialed number, physical private branch extension, and alert pattern characterize a specific called entity, referred to as a "virtual station." Table 4 depicts an illustrative version of this table.

**Table 4 - Call Forwarding Database Based on Dialed Number**

| Virtual Station | | | |
|---|---|---|---|
| Dialed Number | Physical Private Branch Exchange Extension | Alert Pattern | Public Switched Telephone Network Number |
| 732-555-8435 | 1 | 1 | 201-555-1236 |
| 732-555-9858 | 1 | 2 | 908-555-3381 |
| ... | ... | ... | ... |
| 732-555-0475 | *N* | 1 | 212-555-6784 |

The dialed number is a telephone number assigned to represent a specific pair of physical private branch exchange extension and Public Switched Telephone Network number. Dialed number is the telephone number that the calling party specifies while dialing (*e.g.*, 732-555-8435, *etc*.), instead of the actual physical number associated with a terminal being called (*e.g.*, extension 1 at private branch exchange 405, *etc*.). It will be clear to those skilled in the art how to use dialed number.

At task 801, private branch exchange 405 receives from Public Switched Telephone Network 401, in well-known fashion, a first call that is associated with a first dialed number.

At task 802, private branch exchange 405 forwards the first call to a first telephone number, wherein private branch exchange 405 selects the first telephone number based on the first dialed number. The first telephone number exists in the address space of the private branch exchange, namely address space 407, and can be associated with one of wireline terminals 406-1 through 406-*N*. The first telephone number is represented as physical private branch exchange extension in Table 4.
Private branch exchange 405 can also forward to the first telephone number alerting information, described earlier, that is also based on the first dialed number.

At task 803, private branch exchange 405 also forwards the first call to a second telephone number, wherein private branch exchange 405 selects the second telephone number based on the first dialed number. The second telephone number exists in the address space of Public Switched Telephone Network 401, namely address space 404, and can be associated with one of wireless terminals 403-1 through 403-*M*.

Referring to the example in Table 4, the first call, received for dialed number 732-555-8435, is forwarded to physical private branch exchange extension 1 with alert pattern 1 applied and is also forwarded to Public Switched Telephone Number 201-555-1236.

At task 804, some time later, private branch exchange 405 receives from Public Switched Telephone Network 401, in well-known fashion, a second call that is associated with a second dialed number.

At task 805, private branch exchange 405 forwards the second call to the first telephone number, wherein private branch exchange 405 selects the first telephone number based on the second dialed number.

Private branch exchange 405 can also forward to the first telephone number alerting information, described earlier, that is also based on the second dialed number.

At task 806, private branch exchange 405 also forwards the second call to a third telephone number, wherein private branch exchange 405 selects the third telephone number based on the second dialed number. The third telephone number exists in the address space of Public Switched Telephone Network 401 and can, for example, be associated with one of wireless terminals 403-1 through 403-*M*.

Referring to the example in Table 4, the second call, received for dialed number 732-555-9858, is forwarded to physical private branch exchange extension 1 with alert pattern 2 applied and is also forwarded to Public Switched Telephone Number 908-555-3381.

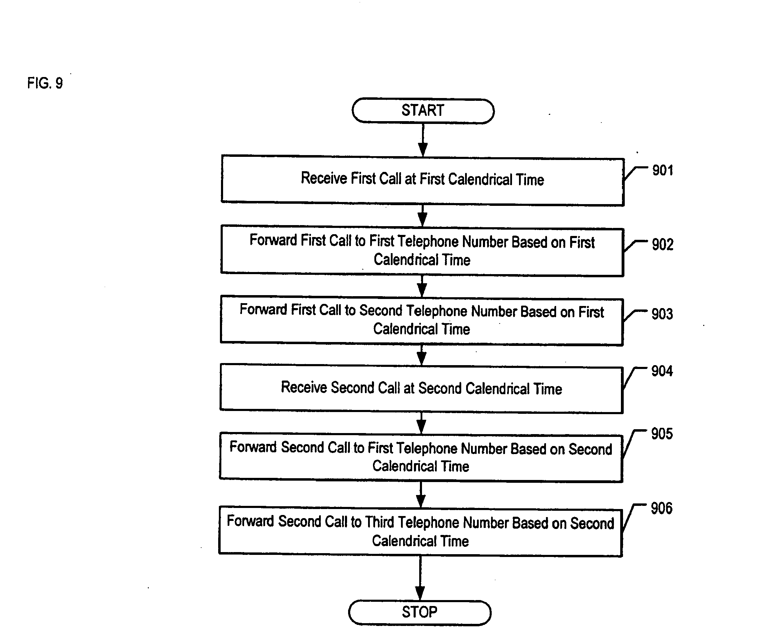

Figure 9 depicts a flowchart of the salient tasks that are relevant to calendrical time and are performed by the illustrative embodiment of the present invention. It will be clear to those skilled in the art which tasks depicted in Figure 9 can be performed simultaneously or in a different order than that depicted.

To accomplish tasks 901 through 906, private branch exchange 405 maintains a table that correlates physical private branch exchange extension, alert pattern, and Public Switched Telephone Network number to calendrical time. Each unique combination of calendrical time, physical private branch extension, and alert pattern characterize a specific called entity, referred to as a "virtual station." Table 5 depicts an illustrative version of this table.

**Table 5 - Call Forwarding Database Based on Calendrical Time**

| Virtual Station | | | |
|---|---|---|---|
| Calendrical Time | Physical Private Branch Exchange Extension | Alert Pattern | Public Switched Telephone Network Number |
| Morning | 1 | 1 | 201-555-1236 |
| Afternoon | 1 | 2 | 908-555-3381 |
| ... | ... | ... | ... |
| Saturday | *N* | 1 | 212-555-6784 |

Calendrical time can be used to track repeating occurrences of time, such as a specific part of each month (*e.g.*, the first week of the month, *etc*.), of each week (*e.g.*, Tuesdays, *etc*.), of each day (*e.g.*, mornings, *etc*.), and so on. For example, private branch exchange 405 might have to handle calls one way if the calls are received in the morning, versus another way if the calls are received during another time of the day. It will be clear to those skilled in the art how to use calendrical time.

At task 901, private branch exchange 405 receives from Public Switched Telephone Network 401, in well-known fashion, a first call that is associated with a first calendrical time.

At task 902, private branch exchange 405 forwards the first call to a first telephone number, wherein private branch exchange 405 selects the first telephone number based on the first calendrical time. The first telephone number exists in the address space of the private branch exchange, namely address space 407, and can be associated with one of wireline terminals 406-1 through 406-*N*. The first telephone number is represented as physical private branch exchange extension in Table 5.

Private branch exchange 405 can also forward to the first telephone number alerting information, described earlier, that is also based on the first calendrical time.

At task 903, private branch exchange 405 also forwards the first call to a second telephone number, wherein private branch exchange 405 selects the second telephone number based on the first calendrical time. The second telephone number exists in the address space of Public Switched Telephone Network 401, namely address space 404, and can be associated with one of wireless terminals 403-1 through 403-*M*.

Referring to the example in Table 5, the first call, received at the calendrical time of morning, is forwarded to physical private branch exchange extension 1 with alert pattern 1 applied and is also forwarded to Public Switched Telephone Number 201-555-1236.
At task 904, some time later, private branch exchange 405 receives from Public Switched Telephone Network 401, in well-known fashion, a second call that is associated with a second calendrical time.

At task 905, private branch exchange 405 forwards the second call to the first telephone number, wherein private branch exchange 405 selects the first telephone number based on the second calendrical time.

Private branch exchange 405 can also forward to the first telephone number alerting information, described earlier, that is also based on the second calendrical time.

At task 906, private branch exchange 405 also forwards the second call to a third telephone number, wherein private branch exchange 405 selects the third telephone number based on the second calendrical time. The third telephone number exists in the address space of Public Switched Telephone Network 401 and can, for example, be associated with one of wireless terminals 403-1 through 403-*M*.

Referring to the example in Table 5, the second call, received at the calendrical time of afternoon, is forwarded to physical private branch exchange extension 1 with alert pattern 2 applied and is also forwarded to Public Switched Telephone Number 908-555-3381.

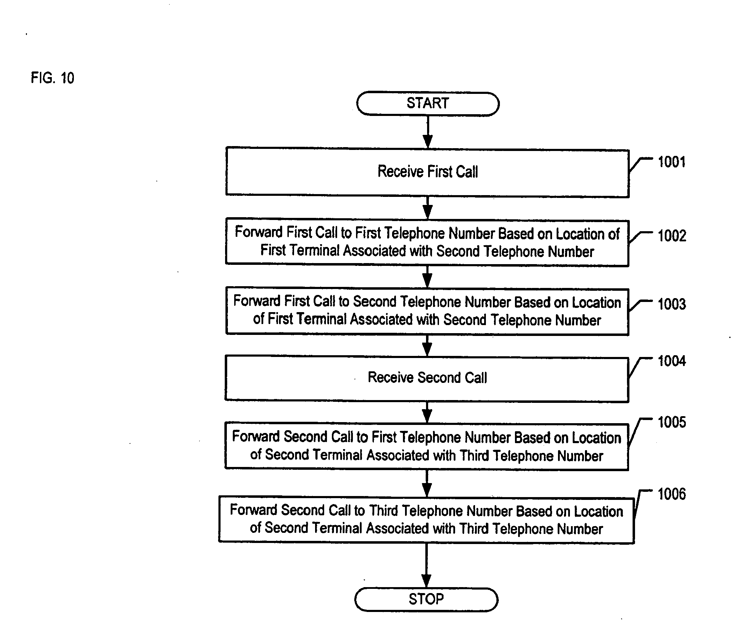

Figure 10 depicts a flowchart of the salient tasks that are relevant to location of terminal and are performed by the illustrative embodiment of the present invention. It will be clear to those skilled in the art which tasks depicted in Figure 10 can be performed simultaneously or in a different order than that depicted.

To accomplish tasks 1001 through 1006, private branch exchange 405 maintains a table that correlates physical private branch exchange extension, alert pattern, and Public Switched Telephone Network number to location of terminal. Each unique combination of location of terminal, physical private branch extension, and alert pattern characterize a specific called entity, referred to as a "virtual station." Table 6 depicts an illustrative version of this table.

**Table 6 - Call Forwarding Database Based on Location of Terminal**

| Virtual Station | | | |
|---|---|---|---|
| Location of Terminal | Physical Private Branch Exchange Extension | Alert Pattern | Public Switched Telephone Network Number |
| Chicago | 1 | 1 | 201-555-1236 |
| New York | 1 | 2 | 908-555-3381 |
| ... | ... | ... | ... |
| Munich | *N* | 1 | 212-555-6784 |

The location of terminal refers to the position of a selected terminal, as tracked by private branch exchange 405. For illustrative purposes, this specification uses the location of wireless terminal 403-1 as the location of terminal. It will be clear to those skilled in the art how to use location of terminal and how to select a particular terminal to evaluate the location of.

At task 1001, private branch exchange 405 receives from Public Switched Telephone Network 401, in well-known fashion, a first call that is associated with a first location of terminal.

At task 1002, private branch exchange 405 forwards the first call to a first telephone number, wherein private branch exchange 405 selects the first telephone number based on the first location of terminal. The first telephone number exists in the address space of the private branch exchange, namely address space 407, and can be associated with one of wireline terminals 406-1 through 406-*N*. The first telephone number is represented as physical private branch exchange extension in Table 6.

Private branch exchange 405 can also forward to the first telephone number alerting information, described earlier, that is also based on the first location of terminal.

At task 1003, private branch exchange 405 also forwards the first call to a second telephone number, wherein private branch exchange 405 selects the second telephone number based on the first location of terminal. The second telephone number exists in the address space of Public Switched Telephone Network 401, namely address space 404, and can be associated with one of wireless terminals 403-1 through 403-*M*.
Referring to the example in Table 6, because the location of wireless terminal 403-1 is Chicago, the first call is forwarded to physical private branch exchange extension 1 with alert pattern 1 applied and is also forwarded to Public Switched Telephone Number 201-555-1236.

At task 1004, some time later, private branch exchange 405 receives from Public Switched Telephone Network 401, in well-known fashion, a second call that is associated with a second location of terminal.

At task 1005, private branch exchange 405 forwards the second call to the first telephone number, wherein private branch exchange 405 selects the first telephone number based on the second location of terminal.

Private branch exchange 405 can also forward to the first telephone number alerting information, described earlier, that is also based on the second location of terminal.

At task 1006, private branch exchange 405 also forwards the second call to a third telephone number, wherein private branch exchange 405 selects the third telephone number based on the second location of terminal. The third telephone number exists in the address space of Public Switched Telephone Network 401 and can, for example, be associated with one of wireless terminals 403-1 through 403-*M*.

Referring to the example in Table 6, because the location of wireless terminal 403-1 is New York, the second call is forwarded to physical private branch exchange extension 1 with alert pattern 2 applied and is also forwarded to Public Switched Telephone Number 908-555-3381.

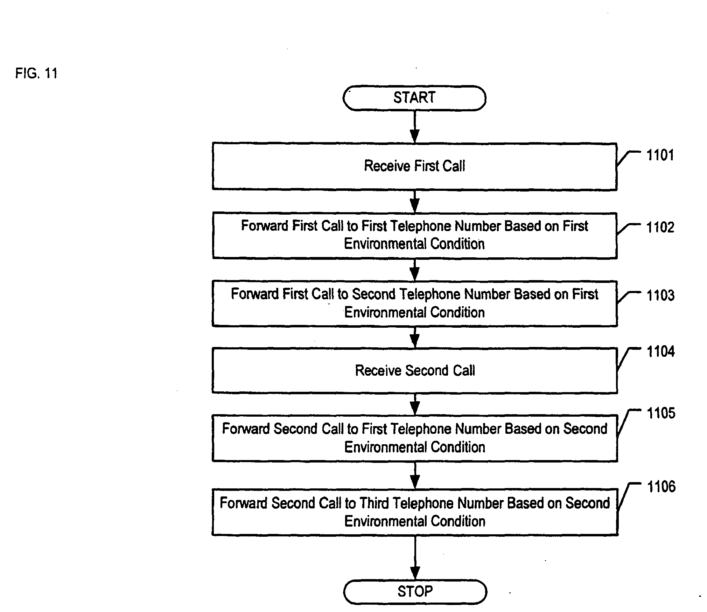

Figure 11 depicts a flowchart of the salient tasks that are relevant to environmental condition and are performed by the illustrative embodiment of the present invention. It will be clear to those skilled in the art which tasks depicted in Figure 11 can be performed simultaneously or in a different order than that depicted.

To accomplish tasks 1101 through 1106, private branch exchange 405 maintains a table that correlates physical private branch exchange extension, alert pattern, and Public Switched Telephone Network number to environmental condition.
Each unique combination of environmental condition, physical private branch extension, and alert pattern characterize a specific called entity, referred to as a "virtual station." Table 7 depicts an illustrative version of this table.

**Table 7 - Call Forwarding Database Based on Environmental Condition**

| Virtual Station | | | |
|---|---|---|---|
| Environmental Condition | Physical Private Branch Exchange Extension | Alert Pattern | Public Switched Telephone Network Number |
| High Humidity | 1 | 1 | 201-555-1236 |
| Low Humidity | 1 | 2 | 908-555-3381 |
| ... | ... | ... | ... |
| High Ozone Level | *N* | 1 | 212-555-6784 |

The environmental condition refers to a particular state (*e.g.*, high, low, *etc*.) of a monitored attribute (*e.g.*, humidity, *etc*.) at a particular location. The location can be, for example, the location of private branch exchange 405. It will be clear to those skilled in the art how to select and use environmental condition, how to quantify the state, and how to select a particular location to evaluate the environmental condition of.

At task 1101, private branch exchange 405 receives from Public Switched Telephone Network 401, in well-known fashion, a first call that is associated with a first environmental condition.

At task 1102, private branch exchange 405 forwards the first call to a first telephone number, wherein private branch exchange 405 selects the first telephone number based on the first environmental condition. The first telephone number exists in the address space of the private branch exchange, namely address space 407, and can be associated with one of wireline terminals 406-1 through 406-*N*. The first telephone number is represented as physical private branch exchange extension in Table 7.

Private branch exchange 405 can also forward to the first telephone number alerting information, described earlier, that is also based on the first environmental condition.
At task 1103, private branch exchange 405 also forwards the first call to a second telephone number, wherein private branch exchange 405 selects the second telephone number based on the first environmental condition. The second telephone number exists in the address space of Public Switched Telephone Network 401, namely address space 404, and can be associated with one of wireless terminals 403-1 through 403-*M*.

Referring to the example in Table 7, because the environmental condition is high humidity, the first call is forwarded to physical private branch exchange extension 1 with alert pattern 1 applied and is also forwarded to Public Switched Telephone Number 201-555-1236.

At task 1104, some time later, private branch exchange 405 receives from Public Switched Telephone Network 401, in well-known fashion, a second call that is associated with a second environmental condition.

At task 1105, private branch exchange 405 forwards the second call to the first telephone number, wherein private branch exchange 405 selects the first telephone number based on the second environmental condition.

Private branch exchange 405 can also forward to the first telephone number alerting information, described earlier, that is also based on the second environmental condition.

At task 1106, private branch exchange 405 also forwards the second call to a third telephone number, wherein private branch exchange 405 selects the third telephone number based on the second environmental condition. The third telephone number exists in the address space of Public Switched Telephone Network 401 and can, for example, be associated with one of wireless terminals 403-1 through 403-*M*.

Referring to the example in Table 7, because the environmental condition is low humidity, the second call is forwarded to physical private branch exchange extension 1 with alert pattern 2 applied and is also forwarded to Public Switched Telephone Number 908-555-3381.

It is to be understood that the above-described embodiments are merely illustrative of the present invention and that many variations of the above-described embodiments can be devised by those skilled in the art without departing from the scope of the invention. It is therefore intended that such variations be included within the scope of the following claims and their equivalents.

## Claims

1. A method comprising:
receiving a first call to a first dialed number (801);
forwarding said first call to a first telephone number (802);
forwarding said first call to a second telephone number (803);
and **characterised in that** said first telephone number exists in the address space of a private branch exchange (405), said second telephone number exists in the address space of the Public Switched Telephone Network (401) and
wherein said first telephone number and said second telephone number are based on said first dialed number.

2. The method of claim 1 further comprising:
receiving a second call to a second dialed number (804);
forwarding said second call to said first telephone number (805); and
forwarding said second call to a third telephone number (806), wherein said third telephone number exists in the address space of the Public Switched Telephone Network (401);
wherein said first telephone number and said third telephone number is based on said second dialed number.

3. The method of claim 1 wherein the forwarding of said first call to said first number (802) is accompanied by an alert that is based on said first dialed number.
